# FASCICULE DE BREVET EUROPEEN

(11) **EP 3 299 701 B1**
(45) Date de publication et mention de la délivrance du brevet: **06.12.2023**
(21) Numéro de dépôt: 17190946.8
(22) Date de dépôt: 13.09.2017
(51) Int. Cl.: F21S 41/19, F21S 41/39, F21S 43/14, F21S 43/37, F21S 41/148, F21S 41/33, F21S 43/19

(54) **SUPPORT DE SOURCE DE LUMIERE AVEC UN ELEMENT DE REFERENCEMENT S'ÉTENDANT SELON DEUX AXES**
HALTERUNG FÜR LICHTQUELLE MIT EINEM BEZUGSELEMENT, DAS SICH ÜBER ZWEI ACHSEN ERSTRECKT
LIGHT-SOURCE HOLDER WITH A REFERENCE ELEMENT EXTENDING ALONG TWO AXES

(30) Priorité: 27.09.2016 FR 1659135
(43) Date de publication de la demande: 28.03.2018
(73) Titulaire: Valeo Vision, 93012 Bobigny Cedex (FR)
(72) Inventeur: DORN, David, 93012 Bobigny Cedex (FR); CHERREAU, Christophe, 93012 Bobigny Cedex (FR); RENAUD, Pierre, 93012 Bobigny Cedex (FR); BAKARY, Silas, 93012 Bobigny Cedex (FR); GARROUSTE, Laurent, 93012 Bobigny Cedex (FR)
(74) Mandataire: Valeo Visibility

(56) Documents cités:
- EP-A1- 2 956 335
- EP-A2- 2 508 795
- EP-B1- 2 956 335
- DE-A1-102015 103 649
- FR-A1- 3 026 360
- FR-A1- 3 026 467
- US-A- 5 730 522

## Description

La présente invention se rapporte au domaine des supports de source de lumière destinés à être montés dans des dispositifs lumineux de véhicule, en particulier pour coopérer avec une optique de mise en forme recevant les rayons lumineux de la source de lumière qu'ils sont destinés à supporter.

Il est connu des dispositifs lumineux de véhicule comprenant une optique de mise en forme agencée pour renvoyer les rayons lumineux provenant d'une zone déterminée dans le dispositif lumineux, de manière à conférer au faisceau lumineux une photométrie donnée, notamment une photométrie règlementaire.

Aussi, lors du montage de la source de lumière dans le dispositif lumineux, il est important que cette source de lumière soit montée précisément dans la zone déterminée et selon une orientation précise dans les trois dimensions de l'espace.

Pour cela, les supports de sources lumineuses comprennent des éléments de référencement selon trois axes donnés transversaux entre eux, notamment trois axes orthogonaux entre eux. Ces éléments de référencement sont agencés pour venir en contact avec d'autres éléments de référencement disposés dans le dispositif lumineux. Les éléments de référencement selon l'un des trois axes donnés du dispositif lumineux sont agencés pour, lorsqu'ils sont en contact avec les éléments de référencement correspondants du support, bloquer le mouvement du support selon cet axe donné et laisser le support libre en déplacement selon les deux autres axes, permettant donc ainsi un ajustement sur les deux autres axes donnés. Ces différents éléments de référencement du support et du dispositif lumineux sont agencés pour que, lorsqu'ils sont tous en contact, la source de lumière soit dans la zone donnée.

Les documents FR3026467A1 et FR3026360A1 décrivent de tels supports.

Pour que cela fonctionne, il faut également que la source lumineuse soit correctement positionnée sur le support par rapport à ces éléments de référencement du support.

Le montage de la source de lumière, notamment dans le cas des diodes électroluminescentes, encore appelées DEL ou LED, sur un support lumineux peut être automatisé. Pour cela, un robot peut être associé à un dispositif de capture d'images couplé à un moyen de traitement de l'image. Ce dernier est couplé à un moyen de pilotage du robot. Le dispositif de vision peut comprendre une seule caméra captant des images en deux dimensions.

L'axe optique de l'objectif de la caméra peut être aligné selon un premier axe donné. Dans le cas d'une DEL posée sur une surface plane du support de cette DEL, ce premier axe donné est de préférence un axe perpendiculaire à cette surface plane, par exemple un axe vertical. De ce fait, les images captées permettront une détection précise du positionnement de la zone où poser la DEL selon les deux autres axes et donc par rapport aux éléments de référencement visibles dans le plan incluant la surface plane.

Cependant, le support peut présenter une forme telle qu'avec un tel système d'automatisation, certains éléments de référencement ne seront pas visibles car alignés avec une portion du support selon une direction parallèle par rapport à l'axe de l'optique de la caméra. C'est par exemple le cas lorsqu'un élément de référencement s'étendant dans une paroi du support parallèle au premier axe donné, donc par exemple un axe perpendiculaire à la surface sur laquelle est posée la DEL.

De ce fait, le positionnement de la DEL sur son support sera imprécis. Ultérieurement, même si le montage du support dans le dispositif lumineux est précis, le positionnement de la DEL par rapport à l'optique de mise en forme sera imprécis.

Le problème technique que vise à résoudre l'invention est donc de trouver un procédé de montage d'un support de sources de lumière dans un dispositif lumineux qui soit plus précis.

A cet effet, un premier objet de l'invention est un support de source lumineuse d'un dispositif lumineux de véhicule automobile selon les caractéristiques de la revendication 1.

Par faces transversales on entend des faces comprises dans des plans transversaux et sécants entre eux, ces faces n'étant pas forcément sécantes ; ce support permet un positionnement plus précis dans un dispositif lumineux en positionnant chacune des surfaces par rapport à l'optique de mise en forme, par exemple sur une platine support de cette optique de mise en forme ou directement sur cette dernière.

Ainsi, en alignant une caméra captant des images en deux dimensions avec la première portion, ou l'alignant selon un axe parallèle au premier axe donné, la deuxième portion sera visible par cette caméra, et cela de manière précise par rapport aux moyens de référencement.

Par ailleurs même en cas d'alignement de cet élément de référencement en deux portions avec une portion du support selon une direction parallèle à ce premier axe donné, l'élément de référencement en deux portions restera visible de la caméra. Cela permet donc d'utiliser une caméra pour la fixation précise de la DEL même avec des supports présentant un tel alignement, par exemple un support avec une paroi perpendiculaire à une surface de positionnement de la DEL, la première portion de cet élément de référencement en deux portions étant agencée dans cette paroi.

Ainsi bien que la première portion ne soit pas visible par une caméra dont l'objectif serait aligné avec la deuxième surface, la deuxième portion sera visible et en positionnant la source de lumière par rapport à cette deuxième portion, cette deuxième portion sera également positionnée par rapport à la première portion et donc par rapport à l'élément de référencement en deux portions.

Le module lumineux selon l'invention peut optionnellement comprendre une ou plusieurs des caractéristiques suivantes :
- la première surface comprend les autres éléments de référencement ; ainsi il est plus aisé de positionner la source de lumière par rapport à l'ensemble des éléments de référencement ;
- la première surface est plane et s'étend selon un premier plan, et la deuxième surface est plane et s'étend selon un deuxième plan, le premier plan et le deuxième plan étant transversaux entre eux, notamment sensiblement perpendiculaires entre eux ; cela facilite le positionnement du support dans le dispositif lumineux ;
- la première surface et la deuxième surface se rejoignent par un pli ou une portion courbée, ledit élément de référencement en deux portions étant un trou à cheval sur la première et la deuxième surface, la partie du trou sur la première surface formant ladite deuxième portion dudit élément de référencement en deux portions et la partie du trou sur la deuxième surface formant ladite première portion dudit élément de référencement en deux portions ; le trou est donc continu de la première surface à la deuxième surface ; cela rend plus simple la réalisation de l'élément de référencement en deux portions dans le support, en gardant une bonne précision pour le positionnement de la deuxième portion ;
- la première portion et/ou la dite deuxième portion dudit élément de référencement en deux portions est oblongue ; ce type de trou est simple et précis à réaliser ;
- le support comprend :
   o une première partie en forme de plaque et comprenant la première surface, et
   o une deuxième partie en forme de plaque comprenant la deuxième surface, les deux plaques étant transversales entre elles, notamment sensiblement perpendiculaires ;
   c'est une forme simple de réalisation d'un support ;
- la première partie comprend au moins une languette comprenant une tranche s'étendant dans un plan sensiblement perpendiculaire à un deuxième des trois axes donnés ; la tranche forme donc ledit deuxième élément de référencement ; c'est une réalisation simple d'un moyen de référencement selon le deuxième axe donné qui soit également visible par une caméra dont l'objectif est orienté selon le premier axe donné ; par ailleurs les languettes peuvent servir à un montage par coulissement dans des glissières, se terminant par une butée s'étendant dans un plan sensiblement perpendiculaire au deuxième axe donné, de sorte qu'en fin de coulissement le référencement selon le deuxième axe donné se fait par butée des tranches contre les butées des glissières ;
- la première partie comprend au moins trois bossages faisant saillie sur la première surface, les sommets des bossages étant coplanaires dans un plan sensiblement perpendiculaire audit premier axe donné ; la tranche forme donc lesdits troisième éléments de référencement ; c'est une réalisation simple d'un moyen de référencement selon le premier axe donné qui soit également visible par une caméra dont l'objectif est orienté selon le premier axe donné ; ces sommets une fois en contact avec des surfaces coplanaires orthogonales au premier axe donné permettront un référencement de la première surface selon le premier axe donné ;
- la première plaque comprend au moins deux languettes agencées de part et d'autres de ladite zone de positionnement, chaque languette comprenant une tranche s'étendant dans un plan perpendiculaire à un deuxième des trois axes donnés, les bossages étant formés sur les languettes ; ainsi le référencement selon le premier axe donné pourra se faire par simple coulissement des languettes dans des glissières du dispositif lumineux, chaque glissière comprenant une rainure dont les parois de coulissement, contre lesquelles vont coulisser les languettes et les bossages, sont agencés dans un plan sensiblement perpendiculaire au premier axe donné ;
- le support est une plaque ; par exemple avec deux parties en forme de plaque comme vu précédemment ;
- le support est une plaque de métal, notamment en aluminium ou dans un alliage d'aluminium ; cela permet d'assurer également la fonction de refroidissement de la source de lumière, et également une facilité de réalisation du support ;
- le support est obtenu par déformation, notamment par pliage, cintrage, ou emboutissage, d'une plaque de tôle comprenant un trou oblong rectiligne s'étendant selon sa longueur, la déformation se faisant autour d'une direction donnée perpendiculaire à cette longueur dudit trou oblong ; ainsi le support est plus simple à réaliser en deux parties, avec l'élément de référencement en deux portions réparties sur ces deux parties ;
- la deuxième surface est sensiblement perpendiculaire à un deuxième des trois axes donné, dit deuxième axe donné ; il devient ainsi plus facile de positionner la deuxième surface et donc la première surface par rapport au premier axe donné, lors du montage du support dans un dispositif lumineux ;
- les trois axes donnés sont orthogonaux entre eux ; cela permet un repérage plus facile de la zone de positionnement et également un référencement plus facile du support dans le dispositif lumineux ;
- le support comprend la source de lumière fixée sur la zone de positionnement ; le support est ainsi prêt à être monté dans un dispositif lumineux selon l'invention ;
- la source de lumière est une source de lumière électroluminescente, notamment une DEL ; l'invention est particulièrement adaptée à ce cas, dans lequel le positionnement de la source de lumière est d'autant plus important ;
- le support est un dissipateur thermique ; cela simplifie la conception du support avec sa source de lumière en un module lumineux destiné à être monté par rapport à une optique de mise en forme ;
- la source de lumière est fixée en contact thermique avec le support ; cela permet de réaliser simplement le refroidissement de la source de lumière, en particulier dans le cas d'une source de lumière électroluminescente.

L'invention a également pour objet un dispositif lumineux de véhicule (revendication 9) comprenant au moins support tel que revendiqué.

Ce dispositif lumineux de véhicule peut être :
- un dispositif d'éclairage de la route, notamment un projecteur ou un antibrouillard ;
- un feu de signalisation, notamment ; un feu stop, un feu de position diurne, un feu de position de nuit, un indicateur de direction ;
- un dispositif d'éclairage intérieur, à savoir de l'intérieur de l'habitacle d'un véhicule, notamment : un plafonnier ou une applique.

Le dispositif lumineux selon l'invention peut optionnellement comprendre une ou plusieurs des caractéristiques suivantes :
- le dispositif lumineux comprend au moins une optique de mise en forme et des éléments de référencement complémentaires agencés de manière à être en contact avec les éléments de référencement du support, de manière à ce que l'optique de mise en forme reçoive la majorité des rayons lumineux émis par la source de lumière et les renvoie de manière à former un faisceau photométrique donné ; le montage du support dans le dispositif lumineux est simple, car il suffit d'une mise en contact des éléments de référencement pour que le support selon l'invention, et donc la source de lumière, soient correctement positionnés par rapport à l'optique de mise en forme ;
- lesdits éléments de référencement complémentaires comprennent une projection s'étendant selon sa longueur selon ou parallèlement à un deuxième des trois axes donnés, dit deuxième axe donné, l'élément de référencement en deux portions du support étant un trou du support, la projection s'étendant dans ce trou et présentant des zones de contact avec les bords du trou, ces zones de contact étant de part et d'autre de la projection et alignées selon une direction parallèle à un troisième des trois axes donnés, dit troisième axe donné ; ainsi par ses bords, le trou forme le premier moyen de référencement, ce dernier permettant le référencement selon le troisième axe donné ;
- les éléments de référencement complémentaires comprennent des glissières alignées selon ou parallèlement audit deuxième axe donné, et le support comprenant des languettes logées dans ces glissières et aptes à coulisser dans ces glissières ; le montage ce fait simplement ; par ailleurs en combinaison avec l'alinéa précédent, le trou permet de laisser le degré de liberté de mouvement selon ledit deuxième axe donné, facilitant le montage ;
- les glissières comprennent un fond en bout de glissière et s'étendant selon un plan sensiblement perpendiculaire audit deuxième axe donné, le support présentant des languettes présentant chacune une tranche s'étendant sensiblement perpendiculairement audit deuxième axe donné et étant en contact avec l'un des fonds ; ainsi par simple glissement jusqu'en butée on assure le référencement selon ledit deuxième axe donné ;
- le support comprend au moins trois bossages répartis sur les languettes, et les glissières comprennent des parois de coulissement s'étendant entre l'entrée des glissières et leur fond, ces parois de glissement étant sensiblement perpendiculaires audit premier axe donné et orientées vers l'intérieur de la glissière, les bossages présentant chacun un sommet, ces sommets étant coplanaires dans un plan sensiblement perpendiculaire audit premier axe donné, les sommets des bossages étant en contact avec les parois de coulissement ; ainsi, l'engagement des languettes et des bossages dans les glissières permet un référencement de la zone de positionnement selon le premier axe donné ;
- ledit premier axe donné est l'axe vertical, ledit deuxième axe donné est l'axe longitudinal, ledit troisième axe donné est l'axe transversal ; le support est ainsi positionné dans les trois directions de l'espace.

Un procédé correspondant de fabrication d'un support de source de lumière comprend:
- une étape de mise en position d'un support comprenant :
   o une zone de positionnement de la source de lumière,
   o des éléments de référencement selon trois axes donnés étant transversaux entre eux, un de ces éléments de référencement, dit élément de référencement en deux portions, comprenant :
      ▪ une première portion s'étendant selon ou parallèlement à un premier des trois axes donnés, et
      ▪ une deuxième portion s'étendant transversalement par rapport à ce premier axe donné, puis
- une étape de placement d'une caméra en vis-à-vis de ladite zone de positionnement, de manière à ce que l'axe optique de l'objectif de la caméra soit parallèle ou aligné avec ledit premier axe donné,
- une étape de capture d'au moins une image du support,
- une étape d'identification dans l'image de ladite deuxième portion de l'élément de référencement en deux portions et des autres éléments de référencement,
- une étape de détermination de l'emplacement de la zone de positionnement par rapport aux positions de ladite deuxième portion de l'élément de référencement en deux portions et aux positions des autres éléments de référencement,
- une étape de mise en place de la source de lumière sur ladite zone de positionnement.

Ainsi, cela permet de monter précisément une source de lumière sur un support selon l'invention.

Le procédé selon l'invention peut optionnellement comprendre une ou plusieurs des caractéristiques suivantes :
- le support est un support selon l'invention ;
- l'étape de mise en place comprend :
   o une sous-étape de positionnement d'un préhenseur tenant la source de lumière entre la caméra et le support,
   o une sous-étape d'alignement de la source de lumière avec la zone de positionnement selon une direction parallèle au ou aligné avec ledit premier axe donné,
   ∘ une sous-étape de déplacement de la source de lumière en translation vers la zone de positionnement, jusqu'à ce que la source de lumière entre en contact avec la zone de positionnement ;
cela permet un montage simple et guidé précisément de la source de lumière sur le support ;
- la source de lumière est une DEL présentant une surface émettrice de lumière et une surface de contact opposée à sa surface émettrice ; de plus, lors de la sous-étape d'alignement de la DEL, la DEL est également orientée de manière à ce que sa surface de contact soit positionnée en vis-à-vis de la zone de positionnement, notamment perpendiculairement au premier axe donné ; par exemple un adhésif ou une colle peut être agencé sur la DEL et/ou la zone de positionnement ;
- l'étape de mise en position du support est précédée d'une étape de mise en forme du support, cette étape comprenant :
   o une sous-étape de réalisation sur et/ou dans une plaque de tôle d'un élément rectiligne et allongé selon une direction donnée, dite direction principale,
   o une sous-étape de réalisation de deuxième(s) et troisième(s) éléments de référencement,
   o une étape de déformation de la plaque de tôle autour d'une direction donnée, dite direction de déformation, de manière à former une zone de déformation s'étendant selon la direction de déformation et séparant d'une part la plaque en une première partie et une deuxième partie, et séparant d'autre part, l'élément rectiligne en une première portion et une deuxième portion, la première partie comprenant la zone de positionnement et cette deuxième portion, et la deuxième partie, transversale à la première partie, comprenant cette première portion, cette première portion et cette deuxième portion formant ledit élément de référencement en deux portions ;
- l'élément rectiligne est réalisé en perçant, en usinant et/ou en découpant un trou oblong au travers de la plaque, le trou formant après l'étape de déformation l'élément de référencement en deux portions.

Selon la demande, une optique de mise en forme dévie les rayons lumineux émis par la source de lumière correspondante du dispositif de manière à conférer au faisceau du dispositif lumineux des caractéristiques photométriques données, notamment d'un faisceau d'éclairage de la route. L'optique de mise en forme peut comprendre un réflecteur, une combinaison de lentilles, une combinaison de réflecteurs, ou une combinaison de lentilles et de réflecteurs.

Dans la présente demande, une source de lumière électroluminescente est une source de lumière mettant en œuvre l'électroluminescence. L'électroluminescence est un phénomène optique et électrique durant lequel un matériau émet de la lumière en réponse à un courant électrique qui le traverse, ou à un fort champ électrique. Cela est à distinguer de l'émission de lumière en raison de la température (incandescence) ou de l'action des produits chimiques (chimiluminescence). Une telle source de lumière est également désignée dans le domaine de l'éclairage par les termes anglais "solid state lightsource".

Un véhicule comprend un dispositif lumineux selon l'invention, notamment connecté à l'alimentation électrique du véhicule.

Sauf indication contraire, les termes « avant », « arrière », « inférieur », « supérieur », « côté », « transversal » se réfèrent au sens d'émission de lumière hors du dispositif lumineux correspondant.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 représente une vue en coupe d'un support de source de lumière selon l'invention positionné par rapport à une optique de mise en forme ;
- la figure 2 représente une vue en perspective, vue de l'avant, d'une partie d'un dispositif lumineux selon l'invention comprenant le support de la figure 1 ;
- la figure 3 représente une vue en perspective, vue de dessous, d'un support de source lumineuse selon l'invention;
- la figure 4 représente une vue de dessous de la figure 3 ;
- la figure 5 représente une vue arrière de la figure 2 ;
- la figure 6 représente un agrandissement d'une partie de la figure 5, toujours en perspective mais selon une autre orientation.

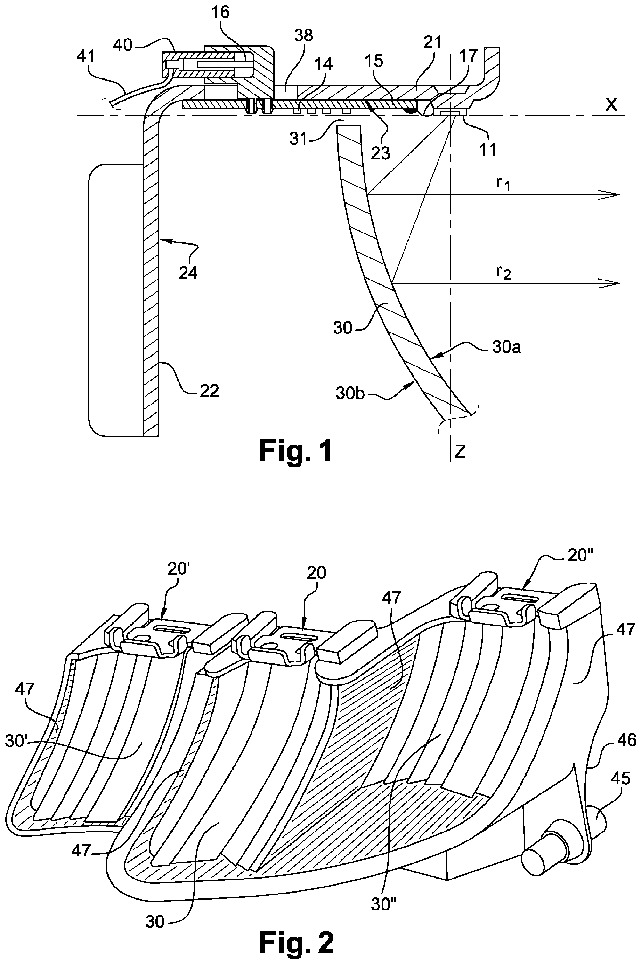

La figure 1 illustre un support 20 de source de lumière 11 selon l'invention, en position dans un dispositif lumineux selon l'invention. Seule l'optique de mise en forme 30 de ce dispositif lumineux est représentée.

Dans cet exemple, cette optique de mise en forme est un réflecteur 30, présentant une surface réfléchissante 30a, orientée vers l'avant, et une surface inactive 30b, orientée vers l'arrière.

Comme on peut le voir, le support 20 est agencé par rapport à ce réflecteur 30 de telle manière que la source de lumière, ici une DEL 11, envoie ses rayons r1, r2, vers la surface réfléchissante 30a. La surface réfléchissante 30a est agencée de manière à envoyer ces rayons r1, r2 selon des directions déterminées de manière à former un faisceau lumineux d'une photométrie donnée, dans cet exemple un faisceau d'éclairage.

Dans cet exemple, le support 20 est formé par une plaque comprenant une première partie 21 et une deuxième partie 22. La première partie 21 et la deuxième partie 22 ont donc chacune la forme d'une plaque.

Dans cet exemple, la première partie 21 est agencée horizontalement lorsque le support 20 et le dispositif lumineux 1 sont en position dans le véhicule.

La première partie 21 comprend une première surface du support, dite surface inférieure 23. Cette surface inférieure 23 est plane et orientée du côté de la deuxième partie 22.

Dans cet exemple, la DEL 11 est agencée sur cette surface inférieure 23 et au-dessus de la surface réfléchissante 30.

La deuxième partie 22 est également en forme de plaque plane, est sensiblement verticale et s'étend transversalement.

La deuxième partie 22 comprend une deuxième surface du support, dite surface avant 24. Cette surface avant 24 est plane et orientée transversalement et verticalement en vis-à-vis de la surface inactive 30b. Elle est donc orthogonale à la première surface 23.

Comme on peut le voir en figure 2, le dispositif lumineux 1 selon l'invention, comprend un boîtier fermé par une glace fermeture, ce boîtier et cette glace de fermeture n'étant pas représentées en figure 2. A l'intérieur de ce boîtier, le dispositif lumineux 1 comprend également une platine 46 supportant trois réflecteurs 30, 30', 30", un réflecteur central 30, un réflecteur gauche 30" et un réflecteur droite 30'.

Dans cet exemple, la platine 46 est formée avec ces réflecteurs 30, 30', 30" en une seule pièce monobloc. Notamment la platine 46 peut être formée venue de matière en une seule pièce avec ces réflecteurs 30, 30', 30".

Ici, la platine 46 comprend des parois séparatrices 47 séparant un réflecteur 30, 30', 30" entre eux. Ces parois séparatrices 47 peuvent, comme ici, être des masques.

Un premier support 20, un deuxième support 20' et un troisième support 20", sont agencés au niveau respectivement du réflecteur central 30, du réflecteur droite 30' et du réflecteur gauche 30''. Chacun de ces supports 20, 20', 20" est équipé d'une DEL 11.

Dans cet exemple, le premier et le troisième supports 20, 20'' et leur DEL sont identiques. Par conséquent, ils portent les mêmes références dans les figures suivantes. En revanche, le deuxième support 20' et sa DEL est lui différent. Cependant cet exemple n'est pas limitatif, par exemple chaque support pourrait porter des DEL différentes.

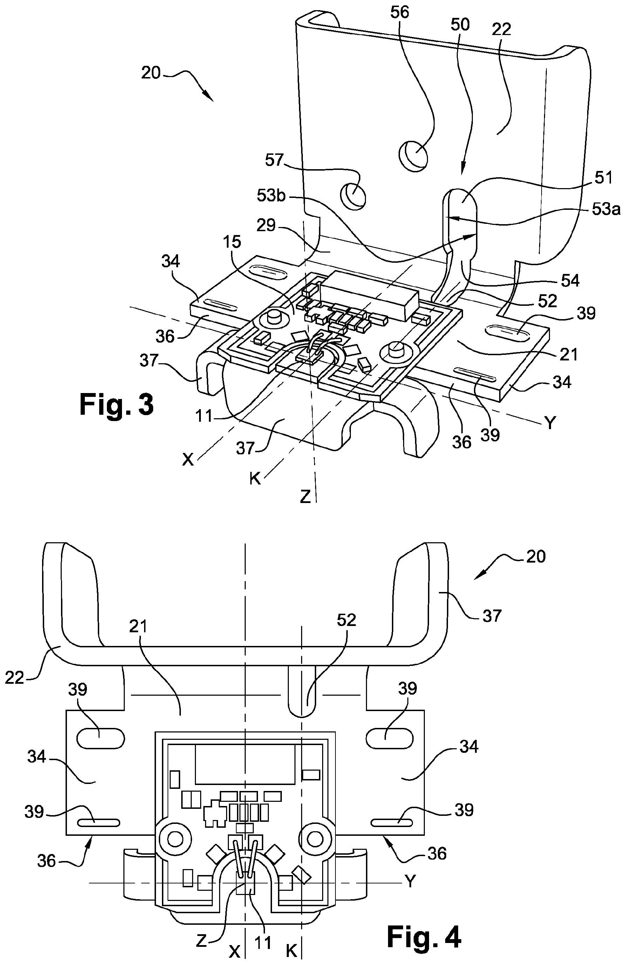

Comme illustré en figure 3 et 4, au niveau de chaque support 20, 20', 20" il est choisi trois axes donnés X, Y, Z, selon lesquels sont agencés des éléments de référencement, apte à référencer le positionnement du support 20, 20', 20" par rapport au réflecteur 30, 30', 30" correspondant et selon ces trois axes donnés X, Y, Z. Ces axes donnés sont dans cet exemple choisis comme étant perpendiculaires entre eux et se croisant au niveau de la zone de positionnement de la DEL 11. Ils forment ainsi un repère orthonormé au niveau de cette zone de positionnement, et de niveau de la DEL 11 lorsqu'elle y est placée.

Dans les figures 3 et 4, le support 20 est orienté de façon inversée par rapport à l'axe vertical Z, comparé à son orientation selon laquelle il est destiné à être utilisée dans le dispositif lumineux illustré en figure 2. En fait, l'orientation en figures 3 et 4, correspond dans cet exemple à l'orientation conférée au support 20 sur une chaîne de montage, avant le montage de la DEL 11.

Par conséquent, en figures 3 et 4, la face supérieure du support 20 n'est pas visible.

Dans cet exemple, le support 20 est formé par une plaque de métal qui a été emboutie. Initialement celle-ci était plane et les différents trous observables dans celle-ci peuvent être percés ou usinés avant conformation de cette plaque dans la forme de support 20 illustré.

Ici, la plaque a été déformée, par exemple emboutissage ou cintrage, de manière à lui conférer deux parties transversales, à savoir la première partie 21 et la deuxième partie 22. Comme on peut le voir sur ces figures 3 et 4, les deux parties 21 et 22 ne sont pas tout à fait adjacentes mais sont reliées entre elles par une partie courbée 29, qui correspond à la partie ayant subi la déformation.

Cette déformation a été réalisée dans cet exemple autour d'une direction parallèle à l'axe transversale Y, ce qui fait que cette partie courbée 29 présente une forme cylindrique dont les génératrices sont parallèle à cette direction.

Selon une réalisation de l'invention et comme ici, initialement, dans la plaque destinée à former le support 20 a été formé un trou traversant oblong 50 s'étendant selon une direction principale K. Après la déformation, ce trou oblong 50, forme un élément de référencement en deux portions présentant une première portion 51, agencée dans la paroi formée par la deuxième partie 22, et une deuxième portion 52 agencée dans la première partie 21, ici dans la paroi formée par la première partie 21. De ce fait, chacune des portions 51, 52 forme un trou traversant de chacune de ces parties. Ce trou oblong est de ce fait continu et s'étend de la première partie 22 à la deuxième partie 21, en passant par la partie courbée 29.

De ce fait, la deuxième partie 22 comprend un élément de référencement, ci-après élément de référencement en deux portions 50.

Selon cet exemple, la première portion 51 s'étend donc en longueur selon un premier des trois axes donnés, à savoir dans cet exemple l'axe vertical Z.

Selon l'invention, comme dans cet exemple, la direction principale K est orientée selon un axe parallèle à un deuxième des trois axes donnés, à savoir dans cet exemple l'axe longitudinal X.

Selon l'invention, les bords 53a et 53b de cette première portion 51 de ce trou oblong 50 peuvent former des butées transversales, permettant un référencement selon un troisième des trois axes donnés. C'est donc le cas dans cet exemple, où ce troisième axe donné est l'axe transversal Y. Le trou oblong 50 forme donc un élément de référencement selon le troisième axe donné, ici l'axe transversal Y.

Selon l'invention, comme dans l'exemple illustré, la première surface 23 peut comprendre également un circuit imprimé 15 auquel la DEL 11 est connectée, par exemple comme ici, par des lames soudées 17.

Dans cet exemple, la DEL 11 est montée directement sur une portion du support 20 à distance du circuit imprimé 15. Néanmoins ceci n'est pas limitatif. En effet, alternativement, la DEL peut être positionnée directement sur le circuit imprimé.

Cette première partie 21 comprend également des languettes latérales 34 agencées de part et d'autre de l'axe longitudinal X. Chacune de ces languettes 34 est coplanaire avec la partie de la première surface 23 supportant le circuit imprimé 15.

Ces languettes 34 comprennent des tranches avant 36 agencées dans un même plan perpendiculaire à l'axe longitudinal X. De ce fait, ces tranches avant 36 forment un moyen de référencement selon l'axe longitudinal X, laissant des degrés de liberté selon l'axe transversal Y et selon l'axe vertical Z.

Par ailleurs, la surface de ces languettes orientée du côté de la deuxième partie 22, qui est une partie de la première surface 23, comprend des bossages 39. Ces bossages 39 peuvent par exemple être réalisés par emboutissage. Dans cet exemple, ces bossages 39 font saillie depuis la première surface 23.

Ces bossages 39 présentent chacun un sommet. L'ensemble de ces sommets étend agencés dans un même plan. Ce plan est perpendiculaire à l'axe vertical Z. De ce fait, ces sommets forment des éléments de référencement selon l'axe vertical Z, laissant des degrés de liberté de mouvement selon l'axe longitudinal X et l'axe transversal Y.

Ces bossages 39 peuvent, comme dans cet exemple, être répartis de la manière suivante : un bossage avant sur chacune des deux languettes latérales et un bossage arrière sur chacune des deux languettes latérales. On a ainsi une meilleure stabilité dans le référencement vertical.

Selon l'invention, et comme dans cet exemple, ces bossages 39 peuvent être allongés selon une direction parallèle au deuxième axe donné, ici l'axe transversal Y. Chaque sommet formant une ligne parallèle au deuxième axe donné Y. On améliore davantage le référencement vertical.

La deuxième partie 22 comprend également un premier et un deuxième trous de fixation, 56 et 57. La deuxième partie 22 et la partie 21 ont également été conformées de manière à présenter des ailettes 37, favorisant la dissipation thermique, donc le refroidissement de la DEL 11 et des composants électroniques 14 agencés sur le circuit imprimé 15.

Lorsque le support est agencé sur la chaîne de montage, l'image captée par une caméra dont l'axe optique de l'objectif serait agencé selon l'axe Z verticale, est tel que l'illustration de la figure 4.

Comment on peut le voir sur cette figure 4, la première portion 51 du trou oblong 50, n'est pas visible. En effet celle-ci est alignée avec l'axe vertical Z, et en particulier alignée avec la paroi que forme la deuxième partie 22.

Cependant, la deuxième portion 52 est visible. Qui plus est, elle est visible en s'étendant selon la direction K parallèle à l'axe longitudinal X. Ainsi, sur l'image capturée par la caméra, un moyen de traitement de l'image peut aisément repérer les éléments de référencement selon l'axe longitudinal X, à savoir ici les tranches avant 36, les éléments de référencement selon l'axe vertical Z, à savoir ici les bossages 39, mais aussi l'élément de référencement selon l'axe transversal Y, à savoir le trou oblong 50 grâce à sa deuxième portion 52.

Il s'ensuit qu'un moyen de traitement de ces images identifiera facilement la zone de positionnement de la DEL 11 par rapport aux trois axes donnés X, Y, Z.

De ce fait, il sera facile de piloter de manière précise un robot venant positionner cette DEL 11.

Cela est particulièrement adapté au cas où la DEL 11 est montée par un placement, encore appelé « pick and place » (pour « collecter et placer » en anglais). Ce placement comprend l'action de venir poser la DEL 11 selon un mouvement de translation vers la zone positionnement, ici selon un mouvement de translation selon l'axe vertical Z. Il s'ensuit qu'avec une caméra et un moyen de pilotage on peut réaliser un montage de la DEL par simple piquage de celle-ci avec précision par rapport aux différents éléments de référencement 50, 39, 36 du support.

Ces éléments de référencement 50, 39, 36 permettent de référencer le support 20 par rapport à des éléments de référencement complémentaires 61, 64, 35, compris dans le dispositif lumineux 1. Ainsi, le support 20, 20', 20'' de la source de lumière 11 sera positionné précisément par rapport à l'optique de mise en forme 30, 30', 30" du dispositif lumineux 1. Par conséquent, la source de lumière 11 sera positionnée précisément par rapport à l'optique mise en forme 30, 30', 30".

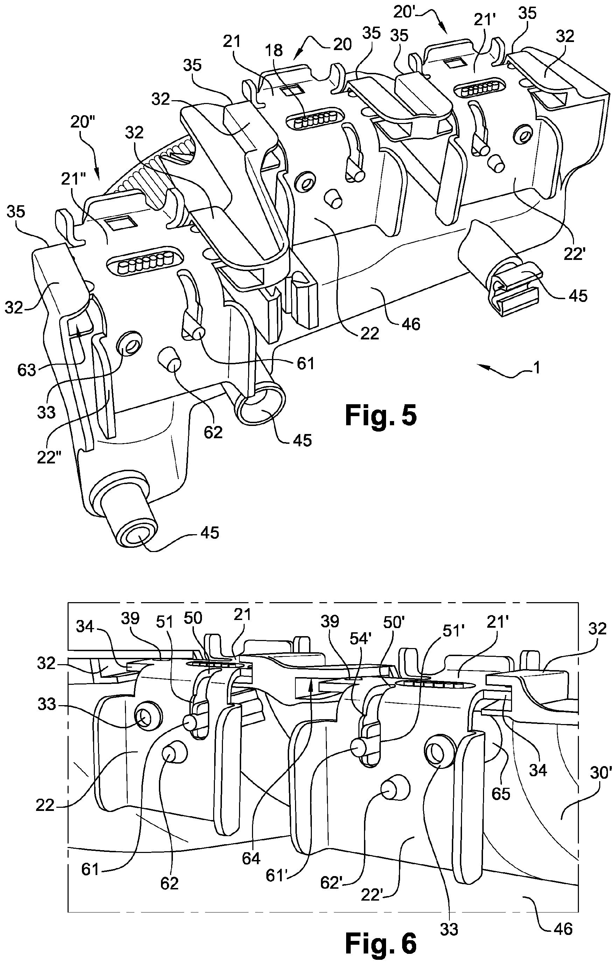

Comme on peut le voir en figures 5 et 6, les trois réflecteurs 30, 30', 30" sont formés sur la platine 46.

Cette platine 46 comprend des moyens de fixation 45 au boîtier du dispositif lumineux 1, dont certains sont agencés pour permettre un réglage de l'orientation de cette platine 46, lors de l'utilisation du dispositif lumineux dans le véhicule.

Les surfaces réfléchissantes des réflecteurs 30, 30', 30" ont des formes différentes, de sorte que les rayons lumineux de chaque réflecteur forment des faisceaux lumineux élémentaires de photométries différentes. Ces faisceaux lumineux élémentaires forment ensemble le faisceau lumineux général émis par le dispositif lumineux 1.

Néanmoins certains réflecteurs peuvent, comme dans cet exemple le réflecteur gauche 30" et le réflecteur central 30, être agencés de manière à recevoir les rayons lumineux de DEL de puissances identiques et agencées en un positionnement identique par rapport aux éléments de référencement du support qui les porte. Les supports de sources de lumière de ces réflecteurs 30, 30" peuvent donc être intervertis.

Egalement, d'autres réflecteurs peuvent, comme dans cet exemple le réflecteur droit 30' et le réflecteur central 30, être agencés de manière à recevoir les rayons lumineux de DEL de puissances différentes et/ou agencées en un positionnement différent par rapport aux éléments de référencement du support qui les porte. Les supports de sources de lumière de ces réflecteurs 30, 30' ne doivent donc pas être intervertis.

Comment peut le voir dans ces figures 5 et 6, pour monter le support par rapport au réflecteur, les languettes transversales 34 du support 20, 20', 20" sont insérées dans des glissières 32.

Dans cet exemple, chacun des réflecteurs 30, 30', 30" comprend à l'arrière une projection 61 s'étendant depuis la face inactive 30b des réflecteurs 30, 30', 30" selon un axe parallèle à l'axe longitudinal X. Cette projection 61 pénètre à l'intérieur de la première portion 51 du trou oblong 50. De ce fait, le support 20, 20', 20" est libre de glisser le long des glissières 32 lors de son positionnement au niveau du réflecteur correspondant 30, 30', 30". Par ailleurs, cette première portion 51 du trou oblong 50 s'étend selon l'axe vertical Z. On a donc la possibilité d'ajuster selon l'axe vertical Z le support par rapport à cette projection 61, et cela avant que l'ensemble des bossages 39 soient insérés dans les glissières 32.

Chacune des glissières 32 comprend une entrée 63, ces glissières 32 étant orientées transversalement, c'est-à-dire que celles-ci comprennent des parois de coulissement 64 contre lesquelles les languettes 34 et les sommets des bossages 39 du support 20, 20', 20" peuvent coulisser.

Au fond de chaque glissière 32, donc dans cet exemple à l'avant de chacune de celles-ci, est agencé un fond 35 selon un plan sensiblement perpendiculaire à l'axe longitudinal X. Ainsi lors du montage du support 20, 20, 20" sur la platine 46, les languettes 34 s'insèrent d'abord à l'intérieur des glissières 32, par l'entrée 63 correspondante (pour des raisons de clarté des figures, seule une entrée est référencée).

Ici, ces glissières 32 sont orientées selon un axe parallèle à l'axe longitudinal X. Le coulissement du support 20, 20', 20" en particulier de ces languettes 34 à l'intérieur des glissières 32 se fait ainsi selon une translation longitudinale.

Ce faisant, les bossages 39 situés à l'avant sur les languettes 34 s'insèrent alors dans ces glissières 32 et entrent en contact avec les parois de glissement 64.

Ensuite, les bossages 39 situés à l'arrière sur les languettes 34 entrent à leur tour à l'intérieur des glissières 32. De manière concomitante ou décalée, la projection 61 entre à l'intérieur de la première portion 51 du trou oblong 50. Ce faisant lors de la poursuite du coulissement, la projection 61 continue de traverser la deuxième portion 52 transversalement à la plaque formant la deuxième partie 22.

Ensuite, les tranches avant 36 entrent en contact avec le fond 35 de chacune de ces glissières 32. De par ce contact selon un plan vertical sensiblement perpendiculaire à l'axe longitudinal X, on a ainsi un référencement selon l'axe longitudinal X.

De même, les bossages 39 étant à l'intérieur des glissières 32, et les parois de coulissement 64 étant agencé selon un plan sensiblement perpendiculaire à l'axe vertical Z, le contact des sommets de ses bossages 39 avec ces parois de coulissement 64, crée un référencement selon l'axe vertical Z.

Par ailleurs en bout de course, la projection 61 est telle que ces bords latéraux entrent en contact avec les bords latéraux 53a, 53b de la première portion 61 du trou oblong 50. De ce fait, les zones de cette projection 61 en contact avec les bords latéraux 53a, 53b sont alignées selon un axe transversal Y. On a donc ici un référencement selon cet axe transversal Y.

Ainsi en fin de coulissement, l'ensemble du support 20, 20', 20" et donc de cette source lumineuse 11 sont positionnés par rapport au réflecteur 30, 30', 30" correspondant.

Selon une réalisation de l'invention, par exemple comme illustré, les éléments de référencement permettent un montage par coulissement dans des glissières pour référencer ce support. Dans l'exemple illustré, ce montage est facilité.

Ce montage permet également une réalisation simple du positionnement de la DEL sur son support antérieurement au montage de celui-ci dans le dispositif lumineux, en utilisant comme repères les éléments de référencement du support, sans ajouter d'autres repères ou d'autres éléments de référencement.

Selon l'invention, chaque réflecteur 30, 30', 30" peut comprendre un fût 62 s'étendant longitudinalement depuis sa surface inactive 30b. Le fût 62 est agencé de manière à ce que lorsque les éléments de référencement 50, 39, 36 sont en contact avec les éléments de référencement complémentaires 61, 64, 35, le fût 62 est en contact avec le premier trou de fixation 56. Il suffit alors de visser une vis 33 au travers de ce premier trou de fixation 56 et dans ce fût 62 pour fixer fermement le support 20, 20', 20" au réflecteur. La forme du support en deux parties transversales ainsi que les glissières renforcent ce plaquage.

Egalement, un ergot 62, 62' peut s'étendre longitudinalement depuis la face inactive de chaque réflecteur 30, 30'. En fin de positionnement, cet ergot s'est clipé dans le deuxième trou de fixation 57. Cet ergot 62, 62', est agencé pour maintenir un faisceau électrique alimentant les DEL des supports 20, 20' et 20", et reliant ces derniers à un faisceau électrique général interne du boîtier 1, ce faisceau électrique général étant destiné à être relié à la batterie du véhicule.

Selon l'invention, pour éviter les risques d'inversion du support de certains réflecteurs, ici une inversion entre le support 20, 20" associé au réflecteur central 30 ou au réflecteur gauche 30" avec celui 20' du réflecteur droit 30', les positions des trous de fixations 56, 57 et de la première portion 51 dans la deuxième partie peuvent être différentes dans ces supports. Par exemple et comme illustré, entre la deuxième partie 22 du support 20 associé au réflecteur du centre 30 et la deuxième partie 22' du support 20' associé au réflecteur de droite 30', ces positions sont inversées, c'est-à-dire symétriques selon un plan, ici longitudinal. De ce fait, la deuxième portion 52 est à gauche dans la deuxième partie 51' du support 20' associé au réflecteur de droite 30', et à droite dans la deuxième partie 51 du support 20 associé au réflecteur central 30

Selon l'invention et comme ici, la première portion 51, 51' du trou oblong 50, 50' peut comprendre un étranglement 54, 54' situé entre ou au niveau de l'extrémité de cette première portion 51, 51' la plus proche de la deuxième portion 52, soit en haut en position de montage dans le dispositif lumineux 1. Cet étranglement permet d'éviter de passer la projection 61, 61' de la première portion 51, 51' à la deuxième portion 52.

Dans cet exemple, le support 20, 20', 20" peut comprendre un orifice 38 traversé par un connecteur 16 relié au circuit imprimé 15. Sur la figure 5, on peut voir les pistes de connexion 18 traversant le trou 38 de manière à être reliées au connecteur 16, non représenté en figure 5.

Ce connecteur 16 est apte à recevoir un connecteur 40 d'un câble d'alimentation 41.

De manière à faciliter le coulissement, un espace 31 peut être prévu entre le réflecteur 30 et la zone de passage de la première partie 21.

## Revendications

1. Support (20 ; 20' ; 20") de source de lumière (11) de dispositif lumineux (1) de véhicule automobile comprenant :
- une zone de positionnement de la source de lumière,
- des éléments de référencement (39, 36, 50) selon trois axes donnés (Z, X, Y) transversaux entre eux, un des éléments de référencement, dit élément de référencement en deux portions (50), comprenant :
o une première portion (51 ; 51') s'étendant selon ou parallèlement à un premier (Z) des trois axes donnés, et
o une deuxième portion (52) s'étendant transversalement par rapport à ce premier axe donné (Z),
- une première surface (23) s'étendant transversalement par rapport au premier axe donné (Z) et comprenant ladite deuxième portion (52) et ladite zone de positionnement de la source de lumière, et
- une deuxième surface (24) qui est orientée du côté de la première surface (23), est transversale à la première surface (23), s'étend selon ou parallèlement au premier axe donné (Z) et comprend ladite première portion (51 ; 51'),
- une paroi comprenant la deuxième surface (24), la première portion (51 ; 51') étant un creux formé dans la paroi et débouchant en la deuxième surface (24).

2. Support (20 ; 20' ; 20") selon la revendication 1, dans lequel la première surface (23) comprend les autres éléments de référencement (39, 36).

3. Support (20 ; 20' ; 20'') selon l'une des revendications 1 ou 2, dans lequel la première surface (23) et la deuxième surface (24) se rejoignent par un pli ou une portion courbée (29), ledit élément de référencement en deux portions (50 ; 50') étant un trou à cheval sur la première et la deuxième surface, la partie du trou (50 ; 50') sur la première surface (23) formant ladite deuxième portion (52) dudit élément de référencement en deux portions et la partie du trou (50 ; 50') sur la deuxième surface (24) formant ladite première portion (51 ; 51') dudit élément de référencement en deux portions.

4. Support (20 ; 20' ; 20") selon l'une des revendications 1 à 3, dans lequel le support comprend :
- une première partie (21 ; 21' ; 21'') en forme de plaque et comprenant la première surface (23), et
- une deuxième partie (22 ; 22' ; 22'') en forme de plaque comprenant la deuxième surface (24), les deux plaques étant transversales entre elles.

5. Support (20 ; 20' ; 20") selon la revendication 4, dans lequel la première partie (21 ; 21' ; 21") comprend au moins trois bossages (39) faisant saillie sur la première surface (23), les sommets des bossages étant coplanaires dans un plan sensiblement perpendiculaire audit premier axe donné (Z) .

6. Support (20 ; 20' ; 20") selon l'une des revendications 4 à 5, dans lequel le support est obtenu par déformation d'une plaque de tôle comprenant un trou oblong rectiligne s'étendant selon sa longueur, la déformation se faisant autour d'une direction donnée (K) perpendiculaire à cette longueur dudit trou oblong.

7. Support (20 ; 20' ; selon l'une des revendications précédentes, dans lequel les trois axes donnés (Z, X, Y) sont orthogonaux entre eux.

8. Support (20 ; 20' ; selon l'une des revendications précédentes, dans lequel le support comprend la source de lumière (11) fixée sur la zone de positionnement, la source de lumière étant une source de lumière électroluminescente (11).

9. Dispositif lumineux (1) de véhicule comprenant :
- au moins un support selon l'une des revendications précédentes.
- au moins une optique de mise en forme (30) et des éléments de référencement complémentaires (64, 35, 61, 61') agencés de manière à être en contact avec les éléments de référencement (39, 36, 50, 50') du support (20, 20', 20"), de manière à ce que l'optique de mise en forme (30, 30'', 30') reçoive la majorité des rayons lumineux (r1, r2) émis par la source de lumière (11) et les renvoie de manière à former un faisceau photométrique donné.

10. Dispositif lumineux (1) selon la revendication 9, dans lequel lesdits éléments de référencement complémentaires (64, 35, 61, 61') comprennent une projection (61, 61') s'étendant selon sa longueur selon ou parallèlement à un deuxième des trois axes donnés, dit deuxième axe donné (X), ledit élément de référencement en deux portions (50, 50') du support (20, 20', étant un trou du support, la projection s'étendant dans ce trou et présentant des zones de contact avec les bords (53a, 53b) du trou, ces zones de contact étant de part et d'autre de la projection et alignées selon une direction parallèle à un troisième des trois axes donnés, dit troisième axe donné (Y).

11. Dispositif lumineux (1) selon la revendication 10, dans lequel les éléments de référencement complémentaires (64, 35, 61, 61') comprennent des glissières (32) alignées selon ou parallèlement audit deuxième axe donné (X), et dans lequel le support (20, 20', 20'') comprend des languettes (34) logées dans ces glissières (32) et aptes à coulisser dans ces glissières.

12. Dispositif lumineux (1) selon la revendication 11, dans lequel les glissières (32) comprennent un fond (35) en bout de glissière et s'étendant selon un plan sensiblement perpendiculaire audit deuxième axe donné (X), et dans lequel le support présente des languettes (34) présentant chacune une tranche (36) s'étendant sensiblement perpendiculairement audit deuxième axe donné (X) et étant en contact avec l'un des fonds (35) .

13. Dispositif lumineux (1) selon la revendication 12, dans lequel le support comprend au moins trois bossages (39) répartis sur les languettes (34), et les glissières comprennent des parois de coulissement (64) s'étendant entre l'entrée (63) des glissières (32) et leur fond (35), ces parois de glissement étant sensiblement perpendiculaires audit premier axe donné (Z) et orientées vers l'intérieur de la glissière, les bossages présentant chacun un sommet, ces sommets étant coplanaires dans un plan sensiblement perpendiculaire audit premier axe donné (Z), les sommets des bossages (39) étant en contact avec les parois de coulissement (64) .

## Patentansprüche

1. Halterung (20; 20'; 20") für eine Lichtquelle (11) einer Beleuchtungsvorrichtung (1) eines Kraftfahrzeugs, die Folgendes aufweist:
- eine Zone zur Positionierung der Lichtquelle,
- Bezugselemente (39, 36, 50) entlang dreier vorgegebener Achsen (Z, X, Y), die quer zueinander verlaufen, wobei eines der Bezugselemente, das sogenannte zweiteilige Bezugselement (50), Folgendes aufweist:
o einen ersten Teil (51; 51'), der sich entlang oder parallel zu einer ersten (Z) der drei gegebenen Achsen erstreckt, und
o einen zweiten Teil (52), der sich quer zu dieser ersten gegebenen Achse (Z) erstreckt,
- eine erste Oberfläche (23), die sich quer zur ersten gegebenen Achse (Z) erstreckt und den zweiten Teil (52) und die Zone zur Positionierung der Lichtquelle aufweist, und
- eine zweite Oberfläche (24), die auf der Seite der ersten Oberfläche (23) ausgerichtet ist, quer zu der ersten Oberfläche (23) verläuft, sich entlang oder parallel zu der ersten gegebenen Achse (Z) erstreckt und den ersten Teil (51; 51') aufweist,
- eine Wand, die die zweite Oberfläche (24) aufweist, wobei der erste Teil (51; 51') eine Vertiefung in der Wand darstellt und in die zweite Oberfläche (24) mündet.

2. Halterung (20; 20'; 20") nach Anspruch 1, wobei die erste Oberfläche (23) die anderen Bezugselemente (39, 36) aufweist.

3. Halterung (20; 20'; 20") nach einem der Ansprüche 1 oder 2, bei der die erste Oberfläche (23) und die zweite Oberfläche (24) über eine Falte oder einen gekrümmten Teil (29) zusammenlaufen, wobei das zweiteilige Bezugselement (50; 50') ein Loch ist, das über die erste und die zweite Oberfläche hinweg verläuft, wobei der Bereich des Lochs (50; 50') auf der ersten Oberfläche (23) den zweiten Teil (52) des zweiteiligen Bezugselements bildet und der Bereich des Lochs (50; 50') auf der zweiten Oberfläche (24) den ersten Teil (51; 51') des zweiteiligen Bezugselements bildet.

4. Halterung (20; 20'; 20") nach einem der Ansprüche 1 bis 3, bei der die Halterung Folgendes aufweist:
- einen ersten Bereich (21; 21'; 21"), der plattenförmig ist und die erste Oberfläche (23) aufweist, und
- einen zweiten Bereich (22; 22'; 22"), der plattenförmig ist und die zweite Oberfläche (24) aufweist, wobei die beiden Platten quer zueinander verlaufen.

5. Halterung (20; 20'; 20") nach Anspruch 4, wobei der erste Bereich (21; 21'; 21") mindestens drei Erhebungen (39) aufweist, die von der ersten Oberfläche (23) vorstehen, wobei die Spitzen der Erhebungen in einer Ebene komplanar sind, die im Wesentlichen senkrecht zu der ersten gegebenen Achse (Z) verläuft.

6. Halterung (20; 20'; 20") nach einem der Ansprüche 4 bis 5, wobei die Halterung durch Verformung einer Blechplatte erhalten wird, die ein geradliniges Langloch aufweist, das sich entlang seiner Länge erstreckt, wobei die Verformung um eine gegebene Richtung (K) senkrecht zu dieser Länge des Langlochs erfolgt.

7. Halterung (20; 20'; 20") nach einem der vorhergehenden Ansprüche, wobei die drei gegebenen Achsen (Z, X, Y) orthogonal zueinander sind.

8. Halterung (20; 20'; 20") nach einem der vorhergehenden Ansprüche, wobei die Halterung die Lichtquelle (11) aufweist, die auf der Zone zur Positionierung befestigt ist, wobei die Lichtquelle eine Elektrolumineszenz-Lichtquelle (11) ist.

9. Beleuchtungsvorrichtung (1) eines Fahrzeugs, die Folgendes aufweist:
- mindestens eine Halterung nach einem der vorhergehenden Ansprüche;
- mindestens eine Formgebungsoptik (30) und komplementäre Bezugselemente (64, 35, 61, 61'), die so angeordnet sind, dass sie mit den Bezugselementen (39, 36, 50, 50') der Halterung (20, 20', 20") in Kontakt stehen, so dass die Formgebungsoptik (30, 30", 30') die Mehrheit der von der Lichtquelle (11) ausgesandten Lichtstrahlen (r1, r2) empfängt und sie so zurücksendet, dass ein gegebenes photometrisches Bündel gebildet wird.

10. Beleuchtungsvorrichtung (1) nach Anspruch 9, bei der die komplementären Bezugselemente (64, 35, 61, 61') eine Projektion (61, 61') aufweisen, die sich entlang ihrer Länge entlang oder parallel zu einer zweiten der drei gegebenen Achsen, der sogenannten zweiten gegebenen Achse (X), erstreckt, wobei das zweiteilige Bezugselement (50, 50') der Halterung (20, 20', 20") ein Loch der Halterung ist, wobei sich die Projektion in dieses Loch erstreckt und Kontaktzonen mit den Rändern (53a, 53b) des Lochs aufweist, wobei diese Kontaktzonen auf beiden Seiten der Projektion liegen und in einer Richtung parallel zu einer dritten der drei gegebenen Achsen, der so genannten dritten gegebenen Achse (Y), ausgerichtet sind.

11. Beleuchtungsvorrichtung (1) nach Anspruch 10, bei der die komplentären Bezugselemente (64, 35, 61, 61') Gleitschienen (32) aufweisen, die entlang oder parallel zu der zweiten gegebenen Achse (X) ausgerichtet sind, und bei der die Halterung (20, 20', 20") Zungen (34) aufweist, die in diesen Gleitschienen (32) aufgenommen sind und in diesen Gleitschienen gleiten können.

12. Beleuchtungsvorrichtung (1) nach Anspruch 11, bei der die Gleitschienen (32) einen Boden (35) am Ende der Schiene aufweisen und sich in einer Ebene im Wesentlichen senkrecht zu der zweiten gegebenen Achse (X) erstrecken, und bei der die Halterung Zungen (34) aufweist, die jeweils eine Kante (36) aufweisen, die sich im Wesentlichen senkrecht zu der zweiten gegebenen Achse (X) erstreckt und mit einem der Böden (35) in Kontakt ist.

13. Beleuchtungsvorrichtung (1) nach Anspruch 12, bei der die Halterung mindestens drei Erhebungen (39) aufweist, die über die Zungen (34) verteilt sind, und die Schienen Gleitwände (64) aufweisen, die sich zwischen dem Eingang (63) der Schienen (32) und ihrem Boden (35) erstrecken, wobei diese Gleitwände im Wesentlichen senkrecht zu der ersten gegebenen Achse (Z) stehen und zum Inneren der Schiene hin ausgerichtet sind, wobei die Erhebungen jeweils einen Scheitelpunkt aufweisen, wobei diese Scheitelpunkte in einer Ebene, die im Wesentlichen senkrecht zu der ersten gegebenen Achse (Z) steht, komplanar sind, wobei die Scheitelpunkte der Erhebungen (39) die Gleitwände (64) berühren.

## Claims

1. Support (20; 20'; 20'') for a light source (11) of a light-emitting device (1) of a motor vehicle, comprising:
- a light-source positioning zone,
- referencing elements (39, 36, 50) for referencing with respect to three given mutually transverse axes (Z, X, Y), one of the referencing elements, termed the two-portion referencing element (50), comprising:
o a first portion (51; 51') extending along or parallel to a first axis (Z) of the three given axes, and
o a second portion (52) extending transversely relative to this first given axis (Z),
- a first surface (23) extending transversely relative to the first given axis (Z) and comprising said second portion (52) and said light-source positioning zone, and
- a second surface (24) that is oriented on the side of the first surface (23), is transverse to the first surface (23), extends along or parallel to the first given axis (Z) and comprises said first portion (51; 51'),
- a wall comprising the second surface (24), the first portion (51; 51') being a recess formed in the wall and opening onto the second surface (24).

2. Support (20; 20'; 20") according to Claim 1, wherein the first surface (23) comprises the other referencing elements (39, 36).

3. Support (20; 20'; 20") according to one of Claims 1 or 2, wherein the first surface (23) and the second surface (24) join via a bend or a curved portion (29), said two-portion referencing element (50; 50') being a hole straddling the first and second surfaces, the part of the hole (50; 50') on the first surface (23) forming said second portion (52) of said two-portion referencing element and the part of the hole (50; 50') on the second surface (24) forming said first portion (51; 51') of said two-portion referencing element.

4. Support (20; 20'; 20") according to one of Claims 1 to 3, wherein the support comprises:
- a first part (21; 21'; 21") in the form of a plate and comprising the first surface (23), and
- a second part (22; 22'; 22") in the form of a plate comprising the second surface (24), the two plates being transverse to each other.

5. Support (20; 20'; 20") according to Claim 4, wherein the first part (21; 21'; 21") comprises at least three bosses (39) forming projections on the first surface (23), the summits of the bosses being coplanar in a plane substantially perpendicular to said first given axis (Z).

6. Support (20; 20'; 20") according to one of Claims 4 to 5, wherein the support is produced by deformation of a sheet of metal comprising a rectilinear oblong hole extending along its length, the deformation being effected about a given direction (K) perpendicular to this length of said oblong hole.

7. Support (20; 20'; 20'') according to one of the preceding claims, wherein the three given axes (Z, X, Y) are orthogonal to one another.

8. Support (20; 20'; 20'') according to one of the preceding claims, wherein the support comprises the light source (11) fixed to the positioning zone, the light source being an electroluminescent light source (11).

9. Vehicle light-emitting device (1) comprising:
- at least one support according to one of the preceding claims,
- at least one shaping optic (30) and complementary referencing elements (64, 35, 61, 61') arranged to be in contact with the referencing elements (39, 36, 50, 50') of the support (20, 20', 20"), so that the shaping optic (30, 30", 30') receives most of the light rays (r1, r2) emitted by the light source (11) and diverts them to form a given photometric beam.

10. Light-emitting device (1) according to Claim 9, wherein said complementary referencing elements (64, 35, 61, 61') comprise a projection (61, 61') extending lengthwise along or parallel to a second of the three given axes, termed the second given axis (X), said two-portion referencing element (50, 50') of the support (20, 20', 20") being a hole in the support, the projection extending into this hole and having zones of contact with the edges (53a, 53b) of the hole, these contact zones being on either side of the projection and aligned in a direction parallel to a third of the three given axes, termed the third given axis (Y).

11. Light-emitting device (1) according to Claim 10, wherein the complementary referencing elements (64, 35, 61, 61') comprise slideways (32) aligned along or parallel to said second given axis (X), and wherein the support (20, 20', comprises tongues (34) accommodated in these slideways (32) and able to slide in these slideways.

12. Light-emitting device (1) according to Claim 11, wherein the slideways (32) comprise an end wall (35) at the end of the slideway, the end wall extending in a plane substantially perpendicular to said second given axis (X), and wherein the support includes tongues (34) each having an edge face (36) extending substantially perpendicularly to said second given axis (X) and being in contact with one of the end walls (35).

13. Light-emitting device (1) according to Claim 12, wherein the support comprises at least three bosses (39) distributed over the tongues (34) and the slideways comprise sliding walls (64) extending between the entry (63) of the slideways (32) and the end wall (35) thereof, these sliding walls being substantially perpendicular to said first given axis (Z) and oriented toward the interior of the slideway, the bosses each having a summit, these summits being coplanar in a plane substantially perpendicular to said first given axis (Z), the summits of the bosses (39) being in contact with the sliding walls (64).
